# EUROPEAN PATENT SPECIFICATION

(11) **EP 4 480 716 B1**
(45) Date of publication and mention of the grant of the patent: **01.04.2026**
(21) Application number: 24182731.0
(22) Date of filing: 18.06.2024
(51) Int. Cl.: B60C 9/20, B60C 9/22

(54) **TIRE COMPRISING A LOW ANGLE BELT**
REIFEN MIT EINEM GÜRTEL MIT NIEDRIGEM WINKEL
PNEUMATIQUE COMPORTANT UNE CEINTURE DE FAIBLE ANGLE

(30) Priority: 20.06.2023 US 202363509153 P; 03.04.2024 US 202418625709
(43) Date of publication of application: 25.12.2024
(60) Divisional application: 25226598.8
(73) Proprietor: The Goodyear Tire & Rubber Company, Akron, OH 44316 (US)
(72) Inventor: MANOGARAN, Arun Prasath, L-7740 Colmar-Berg (LU); MULLER, Philippe Joseph Auguste, B-6971 Champlon (BE); KRIER, Roland Willibrord, L-6622 Wasserbillig (LU); JOUBERT, Paul Benoit, L-2714 Luxembourg (LU); NICOLAS, Florian, F-57330 Entrange (FR); ROSCA, Costel, L-5823 Fentange (LU)
(74) Representative: Kutsch, Bernd

(56) References cited:
- EP-A1- 2 065 226
- EP-A1- 3 838 619
- EP-A1- 3 838 623
- EP-A1- 4 144 539
- EP-A1- 4 197 813
- EP-A1- 4 197 815
- US-A- 3 831 656

## Description

### Field of the Invention

The present invention is directed to a tire comprising a relatively low angle belt. In particular, the tire can be a truck tire. Furthermore, the present invention discloses a method of building such tires.

### Background of the Invention

Modern truck tires are supposed to meet many different performance requirements such as low rolling resistance and/or high abrasion resistance. It is also desirable that such tires are robust. In particular, forces in the area of the grooves and/or shoulders of the tires shall be reduced. For instance, it is possible to reduce such forces by the provision of respective tread constructions. While progress has been made over the past decades in the development of robust tires, such as robust truck tires, significant room for improvement remains.

EP4144539A1, EP3838619A1, EP4197813A1, EP 4 197 815 A1, US 3,831,656 A and EP 2 065 226 A1 describe a tire in accordance with the preamble of claim 1.

A tire comprising two crossed working belts and a 0 degree belt between the working belts is also known from EP 3 838 623 A1.

### Summary of the Invention

The invention relates to a tire in accordance with claim 1.

Dependent claims refer to preferred aspects of the invention.

In a first aspect of the present invention, the invention is directed to a tire comprising a tread and a belt portion located radially below the tread, wherein the tread has two shoulder portions, and wherein each shoulder portion comprises a shoulder groove. The belt portion comprises a pair of working belts and a relatively low angle belt, wherein the relatively low angle belt has reinforcement elements having an angle of less than 5° with a circumferential direction of the tire. The relatively low angle belt comprises a first layer and one or more further layers, wherein the first layer extends over at least 70% of the axial width of the axially largest working belt. Each layer of the one or more further layers of the relatively low angle belt extends over at most 50% of the axial width of the axially largest working belt and is arranged radially below one of the shoulder grooves.

In a preferred aspect of the present invention, the invention is directed to a tire comprising a tread and a belt portion located radially below the tread, wherein the tread has a first shoulder portion on a first lateral side of the tire and a second shoulder portion on a second lateral side of the tire, which is opposite to the first side. The belt portion comprises a pair of working belts and a relatively low angle belt, wherein the relatively low angle belt comprises at least one helically wound ply strip comprising at least one elongated reinforcement element having an angle of less than 5° with a circumferential direction of the tire. Furthermore, the relatively low angle belt comprises a first layer, a second layer and a third layer, formed by said at least one helically wound ply strip. The first layer extends over at least 70% of the axial width of the axially largest working belt, and the second layer is arranged radially below the first layer and below the first shoulder portion. The third layer is arranged radially above the first layer and below the second shoulder portion, and each of the second layer and the third layer extends over at most 50% of the axial width of the axially largest working belt.

Also disclosed is a method of building a tire having a tread with two shoulder portions, each shoulder portion optionally having a circumferential shoulder groove, wherein the method comprises the steps of: Providing at least one carcass ply; applying a first working belt onto the at least one carcass ply; and applying a relatively low angle belt onto the first working belt, including steps a) to c):
a) Winding, in a first winding step, a ply strip about the first working belt so as to form a circumferential band of the relatively low angle belt extending over an axial portion of the first working belt, radially below a first one of the shoulder portions;
b) Continue winding, in a second winding step, the same ply strip in a reversed axial orientation than in the first winding step so as to form another layer of the relatively low angle belt covering at least 70% of the width of the first working belt and at least partially said band formed in the first winding step;
c) Continue winding, in a third winding step, the same ply strip in the same axial orientation as in the first winding step so as to form a further circumferential band of the relatively low angle belt extending over an axial portion of the relatively low angle belt formed in the second winding step, radially below a second shoulder portion of the shoulder portions.

### Brief Description of the Drawings

The invention will be described by way of example and with reference to the accompanying drawings in which:
FIG. 1 is a schematic cross-section of a tire in accordance with a first embodiment of the present invention;
FIG. 2 is a schematic cross-section of another tire in accordance with a second embodiment of the present invention;
FIG. 3 shows a schematic cross-section of an alternative belt portion for one of the tires of Figure 1 and Figure 2;
FIG. 4 shows another schematic cross-section of another alternative belt portion for one of the tires of Figure 1 and Figure 2; and
FIG. 5 shows still another schematic cross-section of a third alternative belt portion for one of the tires shown in Figure 1 and Figure 2, wherein this alternative comprises a non-reinforced filler filling the space between two axially opposite layers of a relatively low angle belt.

### Detailed Description of Preferred Embodiments of the Invention

In the first aspect, the present invention is directed to a tire comprising a tread and a belt portion located radially below the tread, wherein the tread has two shoulder portions, each shoulder portion comprising a, preferably circumferentially extending, shoulder groove. The belt portion comprises a pair of working belts and a relatively low angle belt, wherein the relatively low angle belt has reinforcement elements having an angle of less than 5° (preferably less than 2° or 1°) with a circumferential direction of the tire. The relatively low angle belt comprises a first layer and one or more further layers, wherein the first layer extends over at least 70% (preferably, over at least 75%, and/or less than 95%) of the axial width of the axially largest working belt. Each layer of the one or more further layers of the relatively low angle belt extends over at most 50% (preferably at most 30%, and/or preferably over at least 5%) of the axial width of the axially largest working belt and is arranged radially below one of the shoulder grooves.

Such a construction of the tire having a pair of working belts and a relatively low angle belt, particularly comprising a layer provided radially below a shoulder groove, has been found to improve robustness of the tire, especially in the shoulder area of the tread and/or belt portion. In particular, such a multilayer design of the relatively low angle belt helps to improve durability of the relatively low angle belt, and particularly of its reinforcements, in a shoulder area of the tire.

In one embodiment, the relatively low angle belt comprises at least one ply strip. The ply strip is preferably a wound ply strip. It can be considered as wound (e.g., spirally/helically wound) about an axial direction of the tire, e.g., to form at least one layer of the relatively low angle belt. The strip may be wound at an angle of less than 5° with the circumferential direction of the tire. Preferably, such an angle is between 0.1° and 4°, or between 0.1° and 2°, or even more preferably between 0.2° and 1°. This angle is preferably the same angle as the angle of the parallel and/or elongated reinforcement elements of the ply strip. The reinforcement elements of the ply strip are preferably coated with a (coating) rubber composition so as to form the ply strip. In other words, the ply strip comprises reinforcement elements coated by a rubber composition.

In another embodiment, each of the one or more further layers (e.g., a second layer and/or a third layer) extends over an axial width corresponding to 5% to 30% (preferably 5% to 20%) of the axial width of the axially largest working belt. Alternatively, or in addition, each of the one or more further layers (e.g., a second layer and/or a third layer) extends over an axial width corresponding to a range of 90% to 300% (preferably, of 100% or 110% to 250%) of the axial width of the (radially outer or outermost) opening of a respective shoulder groove located radially above the respective further layer of the relatively low angle belt.

In another embodiment, the one or more further layers comprise a second layer arranged radially below a first shoulder groove, and a third layer arranged radially below a second shoulder groove. Preferably, the relatively low angle belt comprises only these three layers.

In another embodiment, the tread comprises four circumferential grooves, including two shoulder grooves, wherein one of the shoulder grooves is located at each axially/laterally outer side of the tread.

In still another embodiment, the axially largest working belt (which is preferably the radially inner working belt) extends over an axial width which is within a range of 110% to 200%, preferably from 115% to 160%, of the axial distance between the axially (and radially) outer edges of the shoulder grooves. An axially (and radially) outer edge of a shoulder groove can also be described as an axially outer edge of a radially outer opening of such a groove.

In another embodiment, each of the first layer, the second layer, and the third layer are formed by at least one ply strip comprising the reinforcement elements. It is possible that each layer is formed by one or more separate ply strips. Optionally, each strip is wound and/or constructed as mentioned herein above.

In another embodiment, the first layer, the second layer and the third layer are formed by the same ply strip. For instance, it is possible that the second layer is helically wound about a radially lower working belt from an axially inner position towards a first axially outer position. From the first axially outer position the strip is wound radially on top of the second layer in an axially inner direction so as to form the first layer, covering at least 70% of the axial width of the axially largest working belt. From a second axially outer (or outermost) position (e.g., on an opposite axial/lateral side of the tire) of the first layer, the axial winding direction of the strip is reversed so as to provide the third layer on top of the first layer. Providing all three layers with one strip is particularly fast and cost efficient. Also, different tire widths and diameters can be built with such a method, e.g., by using only a single strip type.

In another embodiment, one or more of the first layer, the second layer, and the third layer are each formed by at least one separate ply strip.

In still another embodiment, the second layer is located radially below the first layer and the third layer is located radially above the first layer. Such a preferred construction is easy to manufacture in one strip winding step.

In still another embodiment, both of the second layer and the third layer are located either radially below the first layer or radially above the first layer. It is also possible that the second layer and the third layer are provided at essentially the same radial height. However, each of the second layer and the third layer preferably forms a circumferential band radially below each shoulder groove or shoulder of the tire. A position radially below each shoulder groove or shoulder of the tire does not exclude that one or more further belts are provided radially above the second and/or third layer between the second and/or third layer and the shoulder groove.

In still another embodiment, the relatively low angle belt (including its layers) is provided radially between the two working belts of the pair of working belts.

In still another embodiment, the ply strip has an axial width within a range of 1.5 mm to 25 mm (preferably from 3mm to 16 mm, or from 3 mm to 9 mm), and/or a radial thickness within a range of 0.5 mm to 3 mm, (preferably from 1 mm to 3 mm). Such radial thickness values may also apply to other belts or belt plies mentioned herein, including one or more of working belts, transition belts and top belts.

In still another embodiment, the ply strip comprises from 1, preferably from 2 to 5 parallel reinforcement elements selected from one or more of cords and wires.

In still another embodiment, the ply strip has a density of parallel reinforcement elements ranging from 10 EPI to 20 EPI (EPI = ends per 2.54 cm).

In still another embodiment, the working belts have a density of parallel reinforcement elements ranging from 8 EPI to 15 EPI, preferably from 10 EPI to 14 EPI.

In still another embodiment, the said reinforcement elements are one or more of: elongated reinforcement elements; metal reinforcement elements; metal and/or hybrid cords, optionally comprising multiple metal wires/filaments. A preferred metal herein is steel. Metal reinforcement elements may optionally be coated with brass. In a most preferred embodiment, the reinforcement elements are brass-coated steel cords, particularly comprising multiple steel wires.

In still another embodiment, the reinforcement elements (e.g., of the working belts and/or the low angle belts) are metal cords having a construction a + b x d, wherein a is ranging from 2 to 5 (metal wires/filaments), b is ranging from 2 to 4 (metal wires/filaments) and d (the respective diameter of the metal wires/filaments) is ranging from 0.2 mm to 0.5 mm (preferably from 0.3 mm to 0.45 mm. In particular such a construction is considered to be relatively open for rubber penetration which further improves robustness of the tire.

In another embodiment, the cords (e.g., of the working belts and/or the relatively low angle belts, preferably of all of them) have the construction 4 + 3 x 0.35. In this examples, four inner filaments (or wires) are straight, and three filaments are twisted over the four inner filaments. Alternatively, the thickness of the single wires/filaments forming the cord is preferably within a range t of 0.15 to 0.35 mm. Accordingly, the metal cord may have the construction 4 + 3 x t, such as with t as mentioned above.

In another embodiment, the reinforcement elements or cords have an elongation at 10% of their breaking force which is higher than 0.2% or 0.21%, and preferably lower than 0.4%, 0.35%, 0.3%, or 0.29%, measured after extraction from the cured tire. Preferably such values apply to the cords of the working belts and/or the cords of the relatively low angle belt. Cord elongation or tensile tests on the cords are carried out herein for cords extracted out of the cured tire according to ISO 6892-1B, with a preload of 20 MPa.

In still another embodiment, the pair of working belts comprises a first working belt and a second working belt, wherein the relatively low angle belt is arranged between the first working belt and the second working belt, wherein each working belt of the pair of working belts comprises parallel reinforcement elements, and wherein the reinforcement elements of the first working belt and the reinforcement elements of the second working belt cross each other at an opposing angle, or in other words, with an opposite angular orientation.

In still another embodiment, the absolute value of the angle of the (respective) reinforcement elements of each working belt with the circumferential direction ranges from 10° to 50°, preferably from 15° to 30°, or more preferably from 15° to 25°. Alternatively, or in addition, the difference between i) the absolute value of the angle of the reinforcement elements of the first working belt and ii) the absolute value of the angle of the reinforcement elements of the second working belt is at least 2° (preferably at least 3° and/or at most 15°, or at most 8°, or only at most 6°). Preferably, the radially innermost working belt has the larger absolute angle. This is for instance preferred to have this angle closer to an angle of an/the at least one carcass ply, which has preferably an angle of 90° with the circumferential direction. Preferably, the belt portion has no transition belt in such an embodiment between the radially innermost working belt and the adjacent carcass ply, which is provided radially below said innermost working belt.

In still another embodiment, each working belt of the pair of working belts comprises parallel reinforcement elements, wherein at least one of i) the reinforcement elements of the workings belts, and ii) the reinforcement elements of the relatively low angle belt have a relative elongation at 10% of their/the breaking force which is lower than 0.4 % (preferably, lower than 0.3 %, or lower than 0.29 %). Optionally, said elongation is at least 0.2 % or 0.21%.

In still another embodiment, the tire further comprises a top belt arranged radially above the relatively low angle belts and the pair of working belts. The top belt preferably comprises parallel reinforcement elements having an angle within a range of 10° to 25°, preferably 14° to 21°, with the circumferential direction of the tire. Optionally, the top belt is axially narrower than each of the workings belts and the first layer of the relatively low angle belt.

In still another embodiment, the top belt comprises a rubber composition reinforced by cords (e.g., metal, textile, or hybrid cords). Preferably, the cords are metal cords. Suitable cord constructions include for example, 3 + 2 x 0.35 and/or 5 x 0.35 and/or 5 x 0.38.

In still another embodiment, the belt portion has exactly four belts, i.e., the two working belts, the relatively low angle belt (with multiple layers, preferably exactly three layers) and the top belt.

In still another embodiment, the top belt has an axial width of at least 50% of the axial width of the axially largest working belt and/or the radially innermost working belt. In addition, or alternatively, the axial width of the top belt is within a range of 50% to 90% (preferably 60% to 80%) of the axially largest working belt and/or the radially innermost working belt.

In yet another embodiment, the tire further comprises a transition belt arranged radially below the relatively low angle belts and the pair of working belts. Optionally, the transition belt comprises parallel reinforcement elements having an angle within a range of 35° to 90° (preferably of 50° to 90°, or more preferably of 50° to 75°) with the circumferential direction of the tire. Preferably, the transition belt is axially narrower than each of the workings belts and the first layer of the relatively low angle belt.

In still another embodiment, the tire further comprises a rubber ply arranged between the radially inner working belt and the radially outermost carcass ply. Such a rubber ply is preferably devoid of reinforcements. Optionally, it has a radial thickness within a range of 0.5 mm to 3 mm, preferably within a range of 1 mm to 2.5 mm. Preferably, it has a stiffness which is at most the stiffness of the rubber composition of the radially inner working belt. Preferably, such a stiffness of the rubber composition of the rubber ply is at least 5% lower than the stiffness of the rubber composition of the radially inner working belt. Stiffness is determined herein as G' (1%). G' is obtained herein at 100°C and 1 Hz at 1% strain with an RPA 2000^{™} Rubber Process Analyzer of the company Alpha Technologies, based on ASTM D5289, or equivalent.

In still another embodiment, one or more of the first layer, the second layer, and the third layer (of the relatively low angle belt), do not axially extend beyond an adjacent axially outer edge of the one or more of the working belts.

In still another embodiment, one or more of the first layer, the second layer, and the third layer, extends axially beyond an adjacent axially outer edge of a top belt (if present). Preferably, one or more of the first layer, the second layer, and the third layer extend less than 10 %, (preferably less than 5%) of the total axial width of the top belt beyond an axially outer edge of the top belt.

In still another embodiment, the belt portion has one or more of the following: a first layer of the relatively low angle belt which is axially larger than a top belt; a first working belt which is axially larger than the first layer, and a second working belt which is axially larger than the first working belt (and which is preferably provided between the top belt and the relatively low angle belt), wherein the first working belt is preferably provided radially below the top belt, the second working belt, and the layers of the relatively low angle belt.

In another embodiment, each of the belts extends in an axially outer direction so as to support a shoulder groove on each lateral/axial side of the tire. In other words, each belt optionally extends to an outer axial position which is axially outside a radial outermost end of an axially outer sidewall of a respective shoulder groove.

In still another embodiment, at least one of the working belts and/or the relatively low angle belt have a rubber penetration of at least 90%, preferably of at least 95%, even more preferably of at least 99% or 100%. Rubber penetration is measured herein through an air permeability test according to L. BOURGOIS, Survey of Mechanical Properties of Steel Cord and Related Test Methods, Special Technical Publication 694, ASTM, 1980. Such a high rubber penetration provides an even higher durability of the respective belt layers and helps to avoid cord breaking.

According to the second aspect of the present invention, the invention is directed to a tire comprising a tread and a belt portion located radially below the tread, wherein the belt portion comprises a pair of working belts and a relatively low angle belt comprising at least one ply strip. The ply strip has parallel reinforcement elements having an angle of less than 5° with a circumferential direction of the tire. The pair of working belts comprises a first working belt and a second working belt, wherein each working belt of the pair of working belts comprises parallel reinforcement elements, and wherein the reinforcement elements of the first working belt and the reinforcement elements of the second working belt cross each other at an opposing angle, or, in other words, at opposite angular orientation. Furthermore, an absolute value of the angle of the reinforcement elements of each working belt with the circumferential direction ranges from 10° to 50° preferably from 15° to 30°, or 15° to 25°. Still in accordance with the second aspect of the present invention, the difference between i) the absolute value of the angle with the circumferential direction of the reinforcement elements of the first working belt and ii) the absolute value of the angle with the circumferential direction of the reinforcement elements of the second working belt is at least 2° (preferably at least 3° and/or at most 10°, or at most 8°, or only at most 6°).

Such a combination of a relatively low angle belt with a pair of working belts has been found to be particularly desirable to provide a robust belt portion for a tire, such as a truck tire.

Preferably, the relatively low angle belt is provided between the first working belt and the second working belt.

In one embodiment, the absolute value of the angle of a radially inner working belt is from 2° to 10° (preferably from 3° to 8°) larger than the absolute value of the angle of a radially outer working belt. In particular, it has been found by the inventors that such a relatively small difference is of advantage for the durability of the belt portion.

In another embodiment, the tread has two shoulder portions, with each shoulder portion optionally comprising a shoulder groove, and wherein the relatively low angle belt comprises a first layer and one or more further layers. Optionally, the first layer of the relatively low angle belt extends over at least 70% of the axial width of the axially largest working belt. In addition, or alternatively, each layer of the one or more further layers of the relatively low angle belt extends over at most 50%, preferably at most 30%, of the width of the axially largest working belt and/or is arranged radially below one of the shoulder grooves, particularly to support at least the whole axial width of the respective shoulder groove (measured at the radially outermost opening of such a shoulder groove).

In still another embodiment, the reinforcement elements of the workings belts, and/or the reinforcement elements of the relatively low angle belt have a relative elongation at 10% of their/the breaking force which is within a range of 0.2 % and 0.29 %.

In still another embodiment, one or more, preferably all layers, of the relatively low angle belt are formed by a single ply strip.

In still another embodiment, the tire is one or more of: a pneumatic tire; a radial tire; one of a 17.5, 19.5, 22.5 and a 24.5 inch tire; a truck tire; a tire having at least one steel reinforced carcass ply; a tire comprising steel reinforced working belts and/or a reinforced relatively low angle belt formed by steel reinforced ply strip.

In the third aspect, the invention is directed to a tire comprising a tread and a belt portion located radially below the tread, wherein the tread has a first shoulder portion on a first lateral (or axial) side of the tire and a second shoulder portion on a second lateral (or axial) side of the tire, which is opposite to said first side. The belt portion comprises a pair of working belts and a relatively low angle belt, wherein the relatively low angle belt comprises at least one helically wound ply strip (e.g., helically wound about the axial direction) comprising at least one elongated reinforcement element (such as at least one cord) having an angle of less than 5° with a circumferential direction of the tire. Furthermore, the relatively low angle belt comprises a first layer, a second layer and a third layer, formed by said at least one helically wound ply strip. The first layer extends over at least 70% of the axial width of the axially largest working belt, and the second layer is arranged radially below the first layer and below the first shoulder portion, and optionally below a circumferential shoulder groove of said portion. The third layer is arranged radially above the first layer and below the second shoulder portion, and optionally below a circumferential shoulder groove of said portion, wherein each of the second layer and the third layer extends over at most 50% (preferably at most 30% and/or at least 5% or 10 %) of the axial width of the axially largest working belt.

In one embodiment, the second layer and/or the third layer is arranged axially outside a respective shoulder groove of the respective shoulder portion.

It is emphasized herein that embodiments and/or features of the first aspect and/or the second aspect can also be applied to the third aspect.

A method of building a tire (such as one of the tires mentioned herein above) having a tread with two shoulder portions, each shoulder portion having preferably a circumferential shoulder groove, comprises one or more of the following steps:
Providing at least one carcass ply, e.g., on a tire building drum; optionally applying a transition belt onto the carcass ply; applying a first working belt onto the carcass ply and/or the transition belt; applying a relatively low angle belt onto the first working belt, preferably including one or more of the following sub-steps a) to c):
a) Winding, in a first winding step, a ply strip about (or around) the first working belt so as to form a circumferential band (or layer) of the relatively low angle belt extending over an axial portion of the first working belt, radially below a first one of the shoulder portions and/or a first one of the shoulder grooves (wherein said band or layer has preferably an axial width of at most 50% or 30% (and/or at least 5%) of the axial width of the first working belt).
b) Continue winding, in a second winding step, the same ply strip (preferably in a reversed axial orientation than in the first winding step) so as to form another layer of the relatively low angle belt covering at least 70% (and/or at most 95%) of the width of the first working belt and preferably also said band or layer formed in the first winding step.
c) Continue winding, in a third winding step, the same ply strip (preferably in the same axial orientation as in the first winding step) so as to form a further circumferential band (or layer) of the relatively low angle belt extending over an axial portion of the relatively low angle belt and/or said another layer formed in the second winding step, radially below a second shoulder portion and/or a second shoulder groove (on a side of the tire axially opposite to said first one of the shoulder portions and/or grooves), wherein said further band (or layer) has preferably an axial width of at most 50% or 30% (and/or at least 5%) of the axial width of the first working belt.

Applying a second working belt onto the relatively low angle belt.

Applying a top belt onto the second working belt, wherein the second working belt and the top belt may optionally be applied together as one member onto the relatively low angle belt.

Applying a tread onto the second working belt and/or the top belt, if present.

The above method provides a very efficient way to provide a relatively low angle belt to increase robustness of the belt portion and the tread, such as to the shoulder portions, particularly the shoulder grooves.

In one embodiment, the first winding step, the second winding step and the third winding step are carried out continuously, e.g., in one pass.

In another embodiment, said winding is helically winding, such as about the axial direction, and/or as described in other passages herein.

It is emphasized that the method of building a tire is not limited to the mentioned steps and that such a method does not exclude further manufacturing or mounting steps of further tire components, e.g., sidewalls, chafers, beads, apexes, overlays, etc. Such steps could also be present between one or more of the above-mentioned steps.

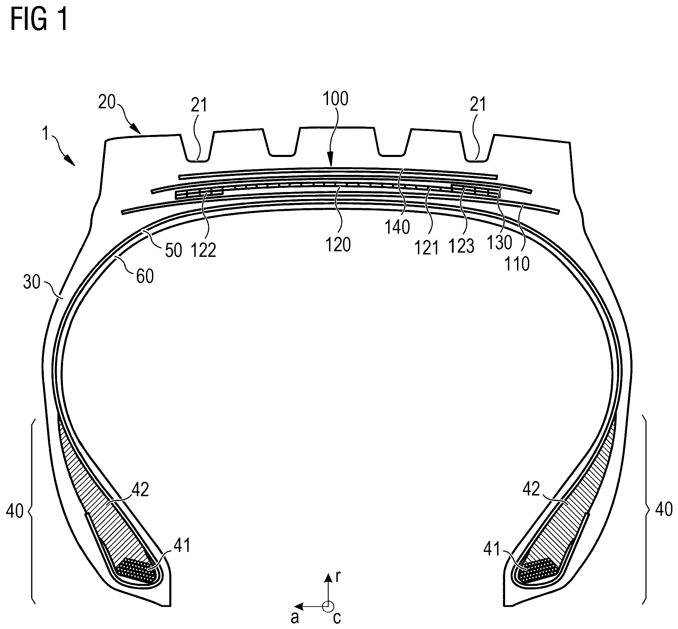

Figure 1 shows a tire 10 in accordance with a preferred embodiment of the present invention. The tire 10 has a tread 20, a pair of sidewalls 30, a pair of bead portions 40, a carcass ply 50, and an innerliner 60. Each bead portion 40 comprises a bead 41 and a bead apex 42. Moreover, the tire 1 has a belt portion 100 comprising multiple belts including a first working belt 110, a second working belt 130, a relatively low angle belt 120 (sometimes also referred to as a zero-degree belt), and a top belt 140. In accordance with the embodiment of Figure 1, the relatively low angle belt 120 comprises three layers, i.e., a first layer 121, a second layer 122 and a third layer 123. Each of the second layer 122 and third layer 123 are arranged radially below a respective shoulder groove 21 of the tread 20.

The first working belt 110 and the second working belt 130 have parallel and elongated reinforcements or reinforcement elements, in this case metal cords, which have an angle with the circumferential direction c within a range of 10° to 50°. The reinforcement elements of the first working belt 110 cross the reinforcement elements of the second working belt 130 with opposite angular orientation, wherein that angle of the first working belt 110 with the circumferential direction c is in a preferred embodiment 4° larger than such an angle of the second working belt 130 with the circumferential direction c. As further schematically shown in Figure 1, the relatively low angle belt comprises at least one ply strip which is wound to form the relatively low angle belt 120. In particular, the metal cords of the relatively low angle belt 120, particularly in the ply strip of the relatively low angle belt 120, have an angle with the circumferential direction c which is smaller than 1° in the present example. The ply strip is helically wound about the axial direction a on top of the circumferential first working belt 110. In the preferred embodiment shown in Figure 1, the whole relatively low angle belt 120, comprising three layers, is formed by a single ply strip. In particular, such a ply strip is helically wound from an axially inner position to an axially outer end position so as to form the second layer 122. After having reached an axially outer end position of the second layer 122, the ply strip is still wound about the axial direction of the tire 1 but is moved during continued winding in an axially inner direction so as to form the first layer 121 (in Figure 1 from the left-hand side to the right-hand side). After continued winding of the ply strip radially above the first working belt 110, the axially outer movement during winding is stopped and reversed again at an axially outer end position on the right-hand side of the tire 1 and so as to continue moving during winding again in an axially inner direction of the tire 1. By said axially inner movement, the third layer 123 of the relatively low angle belt 120 is formed. Finally, the axially inner movement and the winding is stopped as soon as the desired width of the third layer 123 has been obtained. In the present embodiment, it is desired that each of the second and third layers covers at least the bottom of the respective shoulder groove radially above each of the second and third layers 121, 123. The overall axial width of the relatively low angle belt 120 is preferably larger than the total axial width of the top belt 140, e.g. at least 1% axially larger and/or at most 10 % axially larger than the axial width of the top belt 140. The width of the first working belt 110 is larger than the width of the second working belt 130, preferably within a range of 5% to 20% larger than the width of the second working belt 130. On the one hand, the total axial width of one of the second layer 122 and the third layer 123 of the relatively low angle belt 120 is preferably within a range of 10% to 30% of the axial width of the first working belt 110 (which is in this case the axially largest belt of the belt portion 100). On the other hand, the width of the second layer 122 or the third layer 123 of the relatively low angle belt 120 is preferably within a range of 90% to 250% of the axial width of the outermost opening of the respective shoulder groove 21 located radially above the second layer 122 or the third layer 123. The top belt 140 is the axially narrowest belt in the present embodiment. As shown in the present embodiment, it is preferred to have four belts in total. Moreover, the tread 20 has preferably four circumferential grooves. In an alternative embodiment it has five of such grooves.

The ply strip, or in other words the helically wound ply strip, which forms the layers of the relatively low angle belt 120, has as such a width within a range of 3 mm to 25 mm and a radial thickness within a range of 0.5 mm to 3 mm. In a preferred embodiment of the invention, the strip has 5 mm width and 2 mm thickness. In another specific embodiment, it has 15 mm width and 2 mm thickness.

The axial direction a, the circumferential direction c and the radial direction r are indicated in Figure 1 for the sake of better comprehensibility. The axial direction a is parallel to the axis of rotation of the tire. The circumferential direction c is in parallel to the circumference of the tire and the radial direction r is perpendicular to the axial direction a and the circumferential direction c. It is emphasized that each of these directions can have different orientations so that mentioning one of these directions is not generally limited to a specific orientation, unless indicated otherwise herein.

As mentioned above, Figure 1 is a schematic drawing. For instance, the distances between the belts and/or layers shown in Figure 1 are shown larger than in reality. Thus, the void spaces between the depicted belt layers and/or belts will typically be closed upon tire curing. The same applies to the further drawings shown herein.

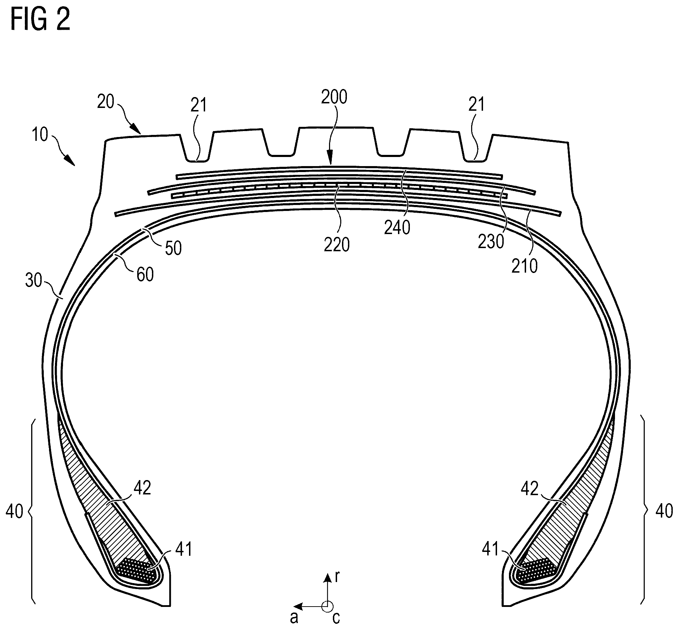

Figure 2 shows another embodiment of a tire 10 in accordance with the present invention. Figure 2 utilizes, where appropriate, the same reference signs as Figure 1 for various components, including the tread 20, shoulder grooves 21, sidewall 30, bead portions 40, apexes 42, beads 41, carcass ply 50 and innerliner 60. In contrast to the embodiment of tire 1 shown in Figure 1, the tire 10 according to Figure 2 has a different belt portion 200. This belt portion 200 comprises a first working belt 210, a second working belt 230, a relatively low angle belt 220 and a top belt 240. The relatively low angle belt does not comprise three layers but a single layer 220 formed by a helically wound ply strip. In particular, it does not comprise two further layers arranged radially below each of the shoulder grooves 21. However, the relatively low angle belt 220 extends also below each shoulder groove 21. In addition, the working belts 210, 230 each comprise parallel metal cords which have an angle with the circumferential direction. The absolute value of the angle of parallel cords of the first working belt 210 is 4° larger than the absolute value of the (opposite) angle of the parallel cords of the second working belt 230. In particular, the cords of the first working belt 210 have an absolute angle of 23° and the cords of the second working belt 230 have an absolute angle of 19°. It has been found that the combination of such a pair of working belts 210, 230 and a relatively low angle belt provided radially between both working belts 210, 230 results in an even more robust construction further improving the robustness of the working belts.

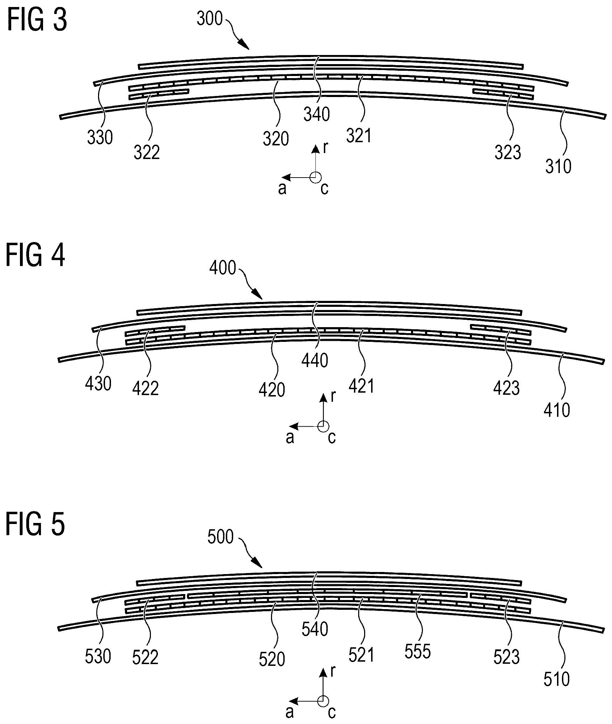

Figure 3 shows an alternative belt portion 300 which could be used in a tire, such as in one of the tires 1 or 10. The belt portion 300 comprises a radially inner working belt 310, a radially outer working belt 330, a relatively low angle belt 320 provided between the first working belt 310 and the second working belt 330, and a top belt 340. The relatively low angle belt 320 comprises a first layer 321, a second layer 322 and a third layer 323. In this embodiment, each layer is formed by a separate ply strip. The remaining construction can be the same or similar as described in relation to the embodiment of Figure 2. The embodiment of Figure 3 also intends to provide second and third relatively low angle belt layers below radially upper shoulder grooves (not explicitly shown herein).

Figure 4 shows yet another embodiment of a belt portion 400 which comprises a first working belt 410, a second working belt 430, a relatively low angle belt 420 and a top belt 440. The relatively low angle belt 420 comprises a first layer 421, a second layer 422, and a third layer 423, wherein each of said layers is formed by a separate ply strip. In contrast to the embodiment shown in Figure 3, the third and second layers 422 and 423 are provided radially above the first layer 421, whereas similar layers have been provided radially below the respective first layer 321 in the embodiment of Figure 3.

Figure 5 shows another embodiment of a possible belt portion 500 which comprises belts similar to the embodiment of Figure 4. In particular, the belt portion 500 comprises a first working belt 510, a second working belt 530, a relatively low angle belt 520 and a top belt 540. The relatively low angle belt 520 comprises a first layer 521 and two radially outer layers 522 and 523, which are arranged radially on top of the first layer 521, radially below respective shoulder grooves (not explicitly shown herein). In addition to the construction shown in Figure 4, the belt portion 500 of Figure 5 has a filler layer 555 consisting of a helically wound rubber strip which is not reinforced, in particular free of fabric or metal cords. It can be used in case of relatively thick layers of the relatively low angle belt, such as the second and/or third layers 522 and 523. However, such a provision is not essential as typically the various belts of the tire will attach to each other during tire cure.

In each of the non-limiting embodiments shown in the Figures herein, the relatively low angle belts have elongated reinforcement elements in the form of metal cords, in particular steel cords, which are preferably brass coated. In a preferred example they have the following cord construction: 4+3x0.35. In this example, four inner filaments (or wires) are straight and three filaments are twisted over the four inner filaments which provides a relatively open construction which allows for example a good rubber (coating) penetration.

For instance, the metal or steel cords in the working belts may have one of the following cord constructions: 3x7x0.22; 3x4x0.22; 4x4x0.22; 4+3x0.35; 3+2x0.35 and have an elongation at 10% of their breaking force which is larger than 0.4%, and preferably smaller than 1%. The thickness of a single wire forming such a cord is preferably within a range of 0.15 to 0.35 mm.

However, even more preferred herein are working belts having the same or similar cords as the relatively low angle belt. For instance, those may have the following cord constructions: 4+3x0.35 and/or 3+2x0.35.

The cords may also have constructions selected from: 3+2x0.35; 3+3x0.35; 3+4x0.35; 4+2x0.35; 4+3x0.35; 4+4x0.35; 5+2x0.35; 5+3x0.35; 5+4x0.35; 4x6x0.19; 4x5x0.20; and a + b x d, wherein a is ranging from 3 to 5, b is ranging from 2 to 4 and d is ranging from 0.2 mm to 0.5 mm (preferably from 0.3 mm to 0.45 mm).

An end per 2.54 cm (EPI) range of cords in the working belts is preferably ranging from 8 to 14 EPI. An end per inch range in the relatively low angle belt ply strips is preferably within a range of 10 EPI to 20 EPI, preferably from 10 EPI to 16 EPI, or more preferably from 14 EPI to 16 EPI. Preferably, an EPI range of the cords in the top belt is from 8 EPI to 14 EPI, preferably less than 10 EPI.

Preferably, the cords utilized herein have an elongation (or relative elongation) at 10% of their breaking force which is larger than 0.2%, preferably smaller than 0.4%.

In relation to the inventive examples of a belt portion 100 shown in Figure 1, the inventors have carried out a finite element analysis (FEA) comparing a tire having only the first layer of the relatively low angle belt (not shown) and the tire shown in Figure 1 having a third layer radially below the respective shoulder groove. This analysis concludes that the maximum force in the relatively low angle belt is reduced by about 25% by the addition of the third layer 123, which is a significant improvement. Thus, tire durability is further improved.

Moreover, the inventors have tested the rubber penetration in the belts, and their layers used in the embodiments herein. The test results show a 100% rubber penetration in the relatively low angle belt, including all of its layers and across the whole axial width. The same applies to each of the working layers. Such a very high rubber penetration makes the tire more robust.

The present invention, and optionally one or more of its embodiments, help to provide robust tires, particularly having an advanced belt portion. For instance, stability of the shoulder and/or groove areas can be improved. Moreover, simple and/or cost-effective manufacturing is possible.

## Claims

1. A tire comprising a tread (20) and a belt portion (100) located radially below the tread, wherein the tread (20) has two shoulder portions, each shoulder portion comprising a shoulder groove (21), wherein the belt portion (100) comprises a pair of working belts (110, 130) and a relatively low angle belt (120), wherein the relatively low angle belt (120) has reinforcement elements making an angle of less than 5° with a circumferential direction of the tire (1, 10), and wherein the relatively low angle belt (120) comprises a first layer (121) and one or more further layers (122, 123), **characterized in that**
the first layer (120) of the relatively low angle belt (120) extends over at least 70% of the axial width of the axially largest working belt (110, 130),
each layer of the one or more further layers (122, 123) of the relatively low angle belt (120) is arranged radially below one of the shoulder grooves (21) and extends over at most 50% of the axial width of the axially largest working belt (110, 130), and **in that**
the tire (1, 10) further comprises one or more of:
a top belt (140) arranged radially above the relatively low angle belt (120) and the pair of working belts (110, 130), the top belt (140) comprising parallel reinforcement elements and preferably having 8 ends per 2.54 cm to 14 ends per 2.54 cm and/or the top belt (140) being preferably axially narrower than the workings belts (110, 130) and the relatively low angle belt (120);
a transition belt arranged radially below the relatively low angle belt (120) and the pair of working belts (110, 130), wherein the transition belt comprises parallel reinforcement elements preferably making an angle within a range of from 35° to 90° with the circumferential direction of the tire (1, 10) and/or the transition belt being preferably axially narrower than each of the workings belts (110, 130) and the relatively low angle belt (120).

2. The tire according to claim 1, wherein the relatively low angle belt comprises a helically wound ply strip.

3. The tire according to claim 1 or 2, wherein the one or more further layers (122, 123) comprise a second layer (122) arranged radially below a first shoulder groove (21), and a third layer (123) arranged radially below a second shoulder groove (21).

4. The tire according to at least one of the previous claims, wherein each of (i) the first layer (121) and (ii) the one or more further layers (122, 123) or the second and the third layer are formed by a helically wound ply strip, preferably a single ply strip.

5. The tire according to at least one of the previous claims, wherein (i) one of the one or more further layers (122, 123) or the second layer is located radially below the first layer (121) and (ii) one of the one or more further layers (122, 123) or the third layer is located radially above the first layer (121).

6. The tire according to at least one of the previous claims, wherein the second layer and the third layer (122, 123) are both located radially below the first layer (121) or are both located radially above the first layer (121).

7. The tire according to at least one of the previous claims, wherein the ply strip has an axial width within a range of from 1.5 mm to 25 mm and a radial thickness within a range of from 0.5 mm to 3 mm; and/or wherein the ply strip comprises from 1 to 5 parallel reinforcement elements, preferably one or more of metal cords and metal wires.

8. The tire according to at least one of the previous claims, wherein the pair of working belts (110, 130) comprises a first working belt (110) and a second working belt (130), wherein the relatively low angle belt (120) is arranged radially between the first working belt (110) and the second working belt (130), wherein each working belt of the pair of working belts (110, 130) comprises parallel reinforcement elements, and wherein the reinforcement elements of the first working belt (110) and the reinforcement elements of the second working belt (130) cross each other at an opposite angular orientation.

9. The tire according to claim 8, wherein an absolute value of the angle of the reinforcement elements of each working belt (110, 130) with the circumferential direction ranges from 10° to 50°, preferably from 15° to 35°, and wherein the difference between i) the absolute value of the angle of the reinforcement elements of the first working belt (110) and ii) the absolute value of the angle of the reinforcement elements of the second working belt (130) is at least 2°.

10. The tire according to at least one of the previous claims, wherein each working belt of the pair of working belts (110, 130) comprises parallel reinforcement elements, and wherein the reinforcement elements of the workings belts and the reinforcement elements of the relatively low angle belt (120) are metal cords having a relative elongation higher than 0.2%, preferably higher than 0.22, and lower than 0.35% or lower than 0.30% at 10% of their breaking force when taken from a cured tire.

11. The tire according to at least one of the previous claims, wherein the absolute value of the angle of a radially inner working belt (110) is from 2° to 10° larger than the absolute value of the angle of a radially outer working belt (130).

12. The tire according to at least one of the previous claims, wherein the tire (1, 10) is one or more or all of:
a 22.5 inch or a 24.5 inch tire;
a truck tire;
a tire having at least one steel reinforced carcass ply;
a tire comprising steel reinforced working belts and a reinforced relatively low angle belt formed by steel reinforced ply strip.

## Patentansprüche

1. Reifen, der eine Lauffläche (20) und einen Abschnitt **in** Form eines Gürtels (100) umfasst, der **in** der radialen Richtung unterhalb der Lauffläche liegt; wobei die Lauffläche (20) zwei Abschnitte in Form von Schultern aufweist ; wobei jeder Abschnitt in Form einer Schulter eine Schulterrille (21) umfasst; wobei der Abschnitt in Form eines Gürtels (100) ein Paar Arbeitsgürtel (110, 130) und einen einen relativ kleinen Winkel bildenden Gürtel (120) umfasst ; wobei der einen relativ kleinen Winkel bildende Gürtel (120) Verstärkungselemente aufweist, die einen Winkel bilden, der kleiner als 5° mit einer umlaufenden Richtung des Reifens (1, 10) ist; und wobei der einen relativ kleinen Winkel bildende Gürtel (120) eine erste Schicht (121) und eine oder mehrere zusätzliche Schichten (122, 123) umfasst; **dadurch gekennzeichnet, dass** :
die erste Schicht (121) des einen relativ kleinen Winkel bildenden Gürtels (120) sich über mindestens 70 % der axialen Breite des größten Arbeitsgürtels in der axialen Richtung (110, 130) erstreckt;
jede Schicht, die aus einer der genannten einen oder mehreren zusätzlichen Schichten (122, 123) des einen relativ kleinen Winkel bildenden Gürtels (120) in der radialen Richtung ausgewählt ist, unterhalb einer der Schulterrillen (21) angebracht ist und sich über höchstens 50 % der axialen Breite des in der axialen Richtung (110, 130) größten Arbeitsgürtels erstreckt; und dass
der Reifen (1, 10) ferner ein oder mehrere Elemente umfasst, die ausgewählt sind aus:
einem oberen Gürtel (140), der in der radialen Richtung über dem einen relativ kleinen Winkel bildenden Gürtel (120) und dem Paar von Arbeitsgürteln (110, 130) angebracht ist; wobei der obere Gürtel (140) parallele Verstärkungselemente umfasst und vorzugsweise 8 Enden pro 2,54 cm bis 14 Enden pro 2,54 cm aufweist und/oder wobei der obere Gürtel (140) in der axialen Richtung vorzugsweise schmaler als die Arbeitsgürtel (110, 130) und der einen relativ kleinen Winkel bildende Gürtel (120) ist;
einem Übergangsgürtel, der in radialer Richtung unterhalb des einen relativ kleinen Winkel bildenden Gürtels (120) und des Paares von Arbeitsgürteln (110, 130) angebracht ist ; wobei der Übergangsgürtel parallele Verstärkungselemente umfasst, die vorzugsweise einen Winkel bilden, der innerhalb eines Bereichs von 35° bis 90° mit der umlaufenden Richtung des Reifens (1, 10) liegt, und/oder wobei der Übergangsgürtel in der axialen Richtung vorzugsweise schmaler ist als jeder der Arbeitsgürtel (110, 130) und der einen relativ kleinen Winkel bildende Gürtel (120).

2. Reifen nach Anspruch 1, wobei der einen relativ kleinen bildende Winkel Gürtel (120) einen Lagenstreifen umfasst, der schraubenförmig gewickelt ist.

3. Reifen nach Anspruch 1 oder 2, wobei die eine oder mehrere zusätzlichen Schichten (122, 123) eine zweite Schicht (122) umfassen, die in der radialen Richtung unterhalb einer ersten Schulterrille (21) angebracht ist, und eine dritte Schicht (123), die in der radialen Richtung unterhalb einer zweiten Schulterrille (21) angebracht ist.

4. Reifen nach mindestens einem der vorhergehenden Ansprüche, wobei jede Schicht aus (i) der ersten Schicht (121) und (ii) der einen oder mehreren weiteren Schichten (122, 123) oder der zweiten und dritten Schicht mittels eines Lagenstreifens ausgeführt ist, der schraubenförmig gewickelt ist, vorzugsweise mittels eines einzelnen Lagenstreifens.

5. Reifen nach mindestens einem der vorhergehenden Ansprüche, wobei (i) eine der einen oder mehreren zusätzlichen Schichten (122, 123) oder der zweiten Schicht in der radialen Richtung unterhalb der ersten Schicht (121) angebracht ist, und (ii) eine der einen oder mehreren zusätzlichen Schichten (122, 123) oder der dritten Schicht in der radialen Richtung oberhalb der ersten Schicht (121) angebracht ist.

6. Reifen nach mindestens einem der vorhergehenden Ansprüche, wobei die zweite Schicht und die dritte Schicht (122, 123) beide in der radialen Richtung unterhalb der ersten Schicht (121) angebracht sind oder beide in der radialen Richtung oberhalb der ersten Schicht (121) angebracht sind.

7. Reifen nach mindestens einem der vorhergehenden Ansprüche, wobei der Lagenstreifen eine axiale Breite aufweist, die in einem Bereich von 1,5 mm bis 25 mm liegt, und eine radiale Dicke, die in einem Bereich von 0,5 mm bis 3 mm liegt; und/oder wobei der Lagenstreifen 1 bis 5 parallele Verstärkungskorde umfasst, vorzugsweise ein oder mehrere Elemente, die aus Metallkorden und Metalldrähten ausgewählt sind.

8. Reifen nach mindestens einem der vorhergehenden Ansprüche, wobei das Paar von Arbeitsgürteln (110, 130) einen ersten Arbeitsgürtel (110) und einen zweiten Arbeitsgürtel (130) umfasst; wobei der Gürtel, der einen relativ kleinen Winkel bildenden Gürtel (120) umfasst, in der radialen Richtung zwischen dem ersten Arbeitsgürtel (110) und dem zweiten Arbeitsgürtel (130) angebracht ist ; wobei jeder Arbeitsgürtel des Paares von Arbeitsgürteln (110, 130) parallele Verstärkungselemente umfasst; und wobei die Verstärkungselemente des ersten Arbeitsgürtels (110) und die Verstärkungselemente des zweiten Arbeitsgürtels (130) einander in entgegengesetzten Winkelausrichtungen kreuzen.

9. Reifen nach Anspruch 8, wobei ein Absolutwert des Winkels, den die Verstärkungselemente jedes Arbeitsgürtels (110, 130) mit der umlaufenden Richtung bilden, in einem Bereich von 10° bis 50°, vorzugsweise von 15° bis 35°, liegt; und wobei die Differenz zwischen (i) dem Absolutwert des Winkels, der durch die Verstärkungselemente des ersten Arbeitsgürtels (110) gebildet wird, und (ii) dem Absolutwert des Winkels, der durch die Verstärkungselemente des zweiten Arbeitsgürtels (130) gebildet wird, mindestens 2° beträgt.

10. Reifen nach mindestens einem der vorhergehenden Ansprüche, wobei das Paar von Arbeitsgürteln (110, 130) parallele Verstärkungselemente umfasst; und wobei die Verstärkungselemente der Arbeitsgürtel und die Verstärkungselemente des einen relativ kleinen Winkel bildenden Gürtels (120) Metallkorde darstellen, die eine relative Bruchdehnung aufweisen, die größer als 0,2 %, vorzugsweise größer als 0,22 %, und die kleiner als 0,35 % oder kleiner als 0,30 % bei 10 % ihrer Bruchdehnung ist, wenn sie aus einem Reifen entnommen werden, der vulkanisiert worden ist.

11. Reifen nach mindestens einem der vorhergehenden Ansprüche, wobei der Absolutwert des Winkels, der durch einen inneren Arbeitsgürtel in der radialen Richtung (110) gebildet wird, um 2° bis 10° größer ist als der Absolutwert, der durch den Winkel eines äußeren Arbeitsgürtels in der radialen Richtung (130) gebildet wird.

12. Reifen nach mindestens einem der vorhergehenden Ansprüche, wobei der Reifen (1, 10) einen oder mehrere der oben genannten Reifen oder alle diese Reifen darstellt, nämlich:
einen 22,5-Zoll-Reifen oder einen 24,5-Zoll-Reifen ;
einen Reifen für einen Lastkraftwagen ;
einen Reifen, der mindestens eine stahlverstärkte Karkassenlage aufweist ;
einen Reifen der Folgendes umfasst: mehrere mit Stahl verstärkte Arbeitsgürtel und einen verstärkten einen relativ kleinen Winkel bildenden Gürtel, der durch einen mit Stahl verstärkten Lagenstreifen erzielt wird.

## Revendications

1. Bandage qui comprend une bande de roulement (20) et une portion sous la forme d'une ceinture (100), qui est située, dans la direction radiale, en dessous de la bande de roulement ; dans lequel la bande de roulement (20) possède deux portions sous la forme d'épaulements ; dans lequel chaque portion sous la forme d'un épaulement comprend une rainure d'épaulement (21) ; dans lequel la portion sous la forme d'une ceinture (100) comprend une paire de ceintures de travail (110, 130) et une ceinture qui forme un angle relativement petit (120) ; dans lequel la ceinture qui forme un angle relativement petit (120) possède des éléments de renforcement qui forment un angle qui est inférieur à 5° avec une direction circonférentielle du bandage (1, 10) ; et dans lequel la ceinture qui forme un angle relativement petit (120) comprend une première couche (121) et une ou plusieurs couches supplémentaires (122, 123) ; **caractérisé en ce que** :
la première couche (121) de la ceinture qui forme un angle relativement petit (120) s'étend sur au moins 70 % de la largeur axiale de la ceinture de travail la plus grande dans la direction axiale (110, 130) ;
chaque couche parmi lesdites une ou plusieurs couches supplémentaires (122, 123) de la ceinture qui forme un angle relativement petit (120) est disposée, dans la direction radiale, en dessous d'une des rainures d'épaulement (21) et s'étend sur au maximum 50 % de la largeur axiale de la ceinture de travail la plus grande dans la direction axiale (110, 130) ; et **en ce que**
le bandage (1, 10) comprend en outre un ou plusieurs éléments qui sont choisis parmi :
une ceinture supérieure (140) qui est disposée, dans la direction radiale, au-dessus de la ceinture qui forme un angle relativement petit (120) et de la paire de ceintures de travail (110, 130) ; dans lequel la ceinture supérieure (140) comprend des éléments de renforcement parallèles et possède de préférence de 8 bouts par 2,54 cm à 14 bouts par 2,54 cm et/ou dans lequel la ceinture supérieure (140) est de préférence plus étroite, dans la direction axiale, que les ceintures de travail (110, 130) et que la ceinture qui forme un angle relativement petit (120) ;
une ceinture de transition qui est disposée, dans la direction radiale, en dessous de la ceinture qui forme un angle relativement petit (120) et de la paire de ceintures de travail (110, 130) ; dans lequel la ceinture de transition comprend des éléments de renforcement parallèles qui forment de préférence un angle qui se situe au sein d'une plage allant de 35° à 90° avec la direction circonférentielle du bandage (1, 10) et/ou dans lequel la ceinture de transition est de préférence plus étroite, dans la direction axiale, que chacune des ceintures de travail (110, 130) et que la ceinture qui forme un angle relativement petit (120).

2. Bandage selon la revendication 1, dans lequel la ceinture qui forme un angle relativement petit (120) comprend une bande de nappe qui est enroulée de manière hélicoïdale.

3. Bandage selon la revendication 1 ou 2, dans lequel lesdites une ou plusieurs couches supplémentaires (122, 123) comprennent une deuxième couche (122) qui est disposée, dans la direction radiale, en dessous d'une première rainure d'épaulement (21), et une troisième couche (123) qui est disposée, dans la direction radiale, en dessous d'une deuxième rainure d'épaulement (21).

4. Bandage selon au moins une des revendications précédentes, dans lequel chaque couche parmi (i) la première couche (121) et (ii) lesdites une ou plusieurs couches supplémentaires (122, 123) ou la deuxième et la troisième couche sont réalisées par l'intermédiaire d'une bande de nappe qui est enroulée de manière hélicoïdale, de préférence d'une bande de nappe unique.

5. Bandage selon au moins une des revendications précédentes, dans lequel (1) une couche parmi lesdites une ou plusieurs couches supplémentaires (122, 123) ou la deuxième couche est disposée, dans la direction radiale, en dessous de la première couche (121) et (ii) une couche parmi lesdites une ou plusieurs couches supplémentaires (122, 123) ou la troisième couche est disposée, dans la direction radiale, au-dessus de la première couche (121).

6. Bandage selon au moins une des revendications précédentes, dans lequel la deuxième couche et la troisième couche (122, 123) sont toutes deux disposées dans la direction radiale en dessous de la première couche (121) ou sont toutes deux disposées dans la direction radiale au-dessus de la première couche (121).

7. Bandage selon au moins une des revendications précédentes, dans lequel la bande de nappe possède une largeur axiale qui se situe dans une plage allant de 1,5 mm à 25 mm et une épaisseur radiale qui se situe dans une plage allant de 0,5 mm à 3 mm ; et/ou dans lequel la bande de nappe comprend de 1 à 5 éléments de renforcement parallèles, de préférence un ou plusieurs éléments qui sont choisis parmi des câblés métalliques et des fils métalliques.

8. Bandage selon au moins une des revendications précédentes, dans lequel la paire de ceintures de travail (110, 130) comprend une première ceinture de travail (110) et une deuxième ceinture de travail (130) ; dans lequel la ceinture qui forme un angle relativement petit (120) est disposée, dans la direction radiale, entre la première ceinture de travail (110) et la deuxième ceinture de travail (130) ; dans lequel chaque ceinture de travail de la paire de ceintures de travail (110, 130) comprend des éléments de renforcement parallèles ; et dans lequel les éléments de renforcement de la première ceinture de travail (110) et les éléments de renforcement de la deuxième ceinture de travail (130) se croisent les uns les autres dans des orientations angulaires opposées.

9. Bandage selon la revendication 8, dans lequel une valeur absolue de l'angle formé par les éléments de renforcement de chaque ceinture de travail (110, 130) avec la direction circonférentielle se situe dans une plage allant de 10° à 50°, de préférence de 15° à 35° ; et dans laquelle la différence entre (i) la valeur absolue de l'angle formé par les éléments de renforcement de la première ceinture de travail (110) et (ii) la valeur absolue de l'angle formé par les éléments de renforcement de la deuxième ceinture de travail (130) est égale à au moins 2°.

10. Bandage selon au moins une des revendications précédentes, dans lequel la paire de ceintures de travail (110, 130) comprend des éléments de renforcement parallèles ; et dans lequel les éléments de renforcement des ceintures de travail et les éléments de renforcement de la ceinture qui forme un angle relativement petit (120) représentent des câblés métalliques qui possèdent un allongement relatif qui est supérieur à 0,2 %, de préférence qui est supérieur à 0,22 %, et qui est inférieur à 0,35 %, ou inférieur à 0,30 %, à 10% de leur force de rupture, lorsqu'on le prélève à partir d'un bandage qui a été vulcanisé.

11. Bandage selon au moins une des revendications précédentes, dans lequel la valeur absolue de l'angle formé par une ceinture de travail interne dans la direction radiale (110) est supérieure à raison de 2° à 10° à la valeur absolue formée par l'angle d'une ceinture de travail externe dans la direction radiale (130).

12. Bandage selon au moins une des revendications précédentes, dans lequel le bandage (1, 10) représente un ou plusieurs bandages parmi ceux repris ci-dessus ou la totalité desdits bandages, à savoir :
un bandage de 22,5 pouces ou un bandage de 24,5 pouces ;
un bandage destiné à un camion ;
un bandage qui possède au moins une nappe de carcasse renforcée avec de l'acier ;
un bandage qui comprend des ceintures de travail renforcées avec de l'acier et une ceinture renforcée qui forme un angle relativement petit, que l'on obtient par l'intermédiaire d'une bande de nappe qui a été renforcée avec de l'acier.
